# EUROPEAN PATENT SPECIFICATION

(11) **EP 1 200 206 B1**
(45) Date of publication and mention of the grant of the patent: **10.11.2004**
(21) Application number: 00947715.9
(22) Date of filing: 17.07.2000
(51) Int. Cl.: B08B 9/02

(54) **PIPE END PREPARATION TOOL**
BEARBEITUNGSWERKZEUG FÜR ROHRENDEN
OUTIL DE PREPARATION D'EXTREMITE DE TUYAU

(30) Priority: 16.07.1999 CA 2277525
(43) Date of publication of application: 02.05.2002
(73) Proprietor: Yehia, Victor, West vancouver, British Columbia V7V 3L9 (CA)
(72) Inventor: Yehia, Victor, West vancouver, British Columbia V7V 3L9 (CA)
(74) Representative: Garavelli, Paolo
(86) International application number: PCT/CA2000/000837
(87) International publication number: WO 2001/005525

(56) References cited:
- GB-A- 2 241 450
- US-A- 2 383 464
- US-A- 5 058 327
- US-A- 5 269 104
- DATABASE WPI Section PQ, Week 8445 Derwent Publications Ltd., London, GB; Class P43, AN 84-280842 XP002152267 & SU 1 077 668 A (VOLG TRACTOR COMP), 7 March 1984 (1984-03-07)

## Description

### Field of Invention

This invention relates to an hand tool for cleaning the end of a pipe.

### Background of Invention

Previous attempts (such as US-A-4,133,070; US-A-5,566,416; US-A-5,146,717; CA-A-1072709; GB-A-2241450; SU-A-1077668; US-A-2 383 464, US-A-5 058 327, US-A-5 269 104 to assist a workman clean pipes have suffered from certain defects (for example, requiring excessive twisting of the workman's wrist). The present invention addresses such defects.

### Statement of Invention

There is provided a hand tool for cleaning the end of a pipe comprising: (a) a longitudinal member having first and second opposed end portions and first and second opposed longitudinal sides; (b) a first grippable member rotatably connected to said first end portion on said first longitudinal side; (c) first cleaning means connected to said second end portion on said second longitudinal side, for receiving the pipe end in a direction transverse to said longitudinal member and for cleaning a first surface of the pipe end.

Particular embodiments of the invention are the subject of the dependent claims.

### Brief Description of Drawings

Advantages of the present invention will become apparent from the following detailed description taken in conjunction with preferred embodiments shown in the accompanying drawings, in which:
Fig. 1 is a front perspective view of the tool;
Fig. 2 is a perspective view of the tool of Fig. 1 rotated upside down;
Fig. 3 is the top plan view of the tool of Fig. 1;
Fig. 4 is the bottom plan view of the tool of Fig. 1;
Fig. 5 is a side view of the tool of Fig. 1;
Fig. 6 is a side view of another embodiment of the tool of Fig. 1;
Fig. 7 is a side view of another embodiment of the tool;
Fig. 8(a) is a partial sectional view of another embodiment of the female brush of the tool;
Fig. 8(b) is a partial sectional view of another embodiment of the male brush of the tool;
Fig. 8(c) is a top plan view of another embodiment of the male brush of the tool;
Fig. 9 is a partial side view of another embodiment of the tool;
Fig. 10 is a partial bottom plan view of another embodiment of the tool;
Fig. 11(a) is a partial sectional view of another embodiment of the female brush of the tool;
Fig. 11(b) is a partial sectional view of another embodiment of the male brush of the tool;
Fig. 12 is a partial side view of another embodiment
Fig. 13 is a top plan view of another embodiment of the male brush of the tool.

### Detailed Description of the Preferred Embodiments

Herein, the term "pipe end" includes not only the end of a metallic pipe but also the end of a pipe connector (which is typically much shorter than the pipes it connects to).

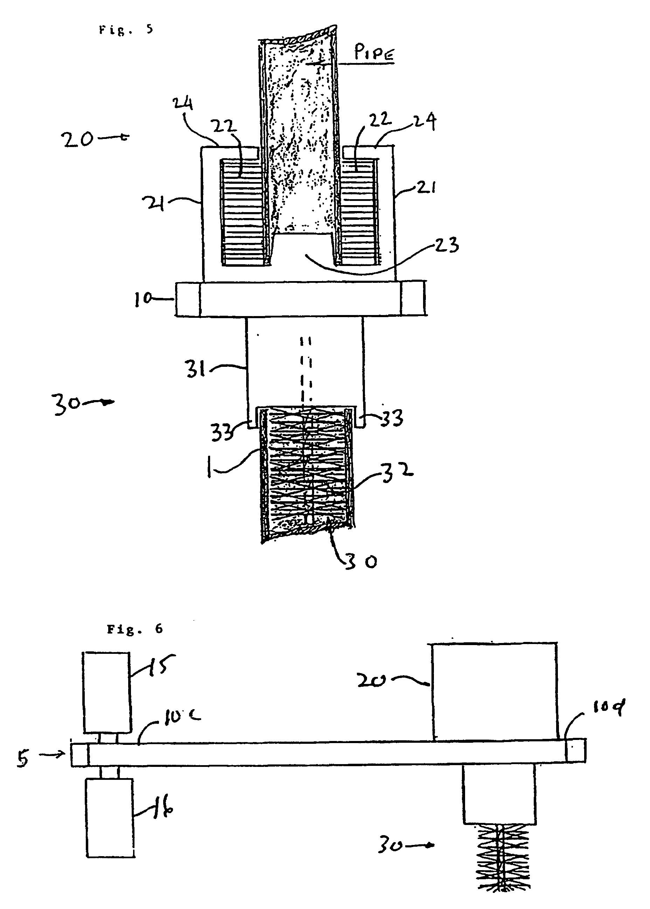

Hand tool 5 has rigid member 10 which has two opposed sides 10a and 10b, and opposed end portions 10c and 10d. Side 10a at end portion 10c has rotatably attached member 15 to be gripped by the fingers of one hand. On the opposed side 10b, at end portion 10d, male hard brush 30 is rigidly and undetachably disposed for receiving pipe end 1. One hand holds tool 5. Pipe end 1 is inserted over male brush 30 so that it abuts pedestal 31 (explained in detail below in conjunction with Fig. 5) and is disposed in a snug friction fit therewith and is held by the other hand. The inner surface of pipe end 1 is cleaned by a pedalling motion. One pedalling motion is achieved by gripping rotatable member 15 and holding end portion 10c stationary with one hand while rotating, with the other hand, pipe end 1 fitted over male brush 30, about end portion 10c. Another pedalling motion is achieved by gripping rotatable member 15 and moving end portion 10c with one hand, and gripping pipe end 1 fitted over male brush 30, with the other hand, and moving end portion 10c and pipe end 1 about each other. Either way, the effect of the pedalling motion is that male brush 30 will rotationally scrape and clean the inner surface of pipe end 1.

Similarly, on side 10b and at end portion 10c, rotatable member 16 is gripped by the fingers of one hand; and on the opposed side 10b and end portion 10d, there is rigidly and undetachably disposed female brush 20.

Brushes 20 and 30 are rigidly and undetachably attached to member 10 by conventional means such as bolts, soldering and the like (not shown). Alternatively, brushes 20 and 30 may be detachably attached to member 10 by conventional threaded mounting (brush 20 would be threaded to engage a corresponding threaded socket in member 10, not shown).

Female brush 20 is shown in more detail in Fig. 5. There is a circular wall 21 containing a cylindrical set of hard brush wires 22. There is an upper annular lip 24 to guide pipe end 1 into female brush 20. Brush wires 22 are directed in the same tangential direction and collectively define an internal diameter that is slightly less than the outer diameter of pipe end 1. Lip 24 has an internal diameter which is slightly more than the outer diameter of pipe end 1. Accordingly, a firm friction fit is created when pipe end 1 is placed within female brush 20. Within female brush 20 is a central, frusto-conical guide projection 23, to facilitate the entrance and placement of pipe end 1 within female brush 20.

Male brush 30 and female brush 30 are disposed on the opposed sides of member 10. The outer diameter of male brush 30 is slightly larger than then inner diameter of pipe end 1. Male brush 30 has a pedestal 31 on which hard brush wires 32 are disposed. Abutting pedestal 31, the terminal of pipe end 1 is disposed a small distance from member 10. Pedestal 31 has a circular lip 33 to guide the manual placement of pipe end 1 onto pedestal 31. Brush wires 32 collectively have an outer diameter which is slightly larger than the internal diameter of pipe end 1.

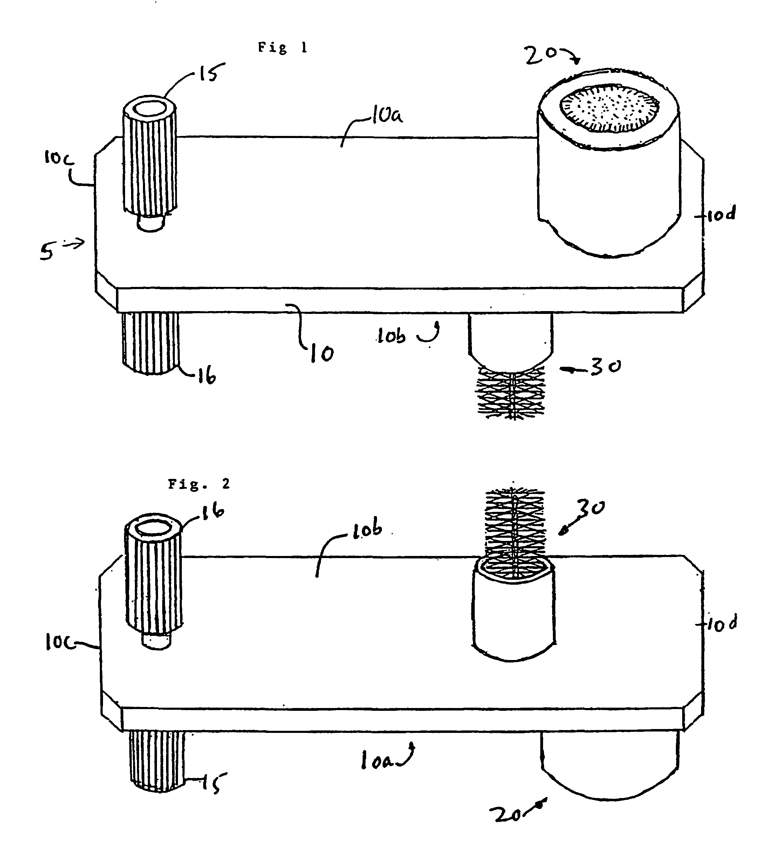

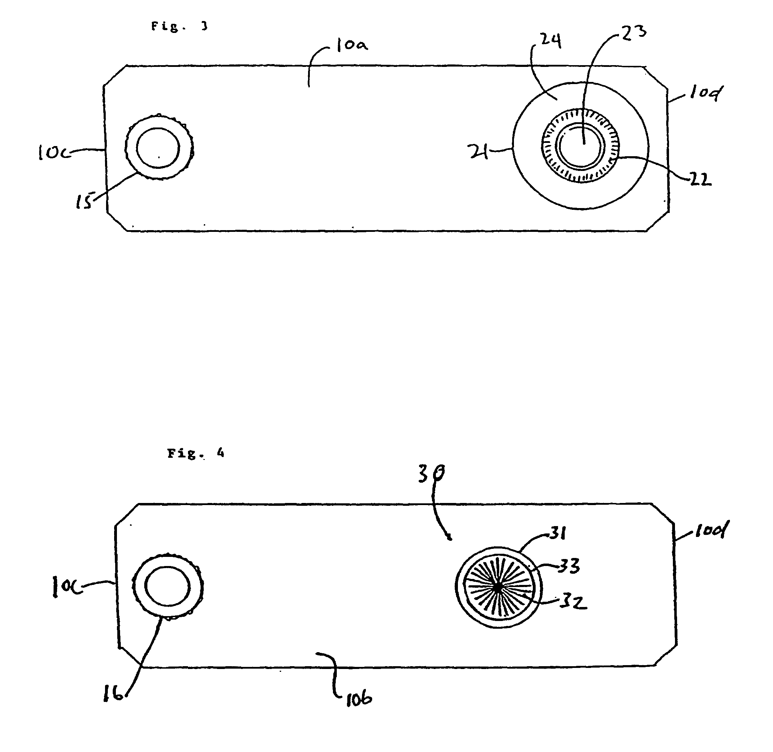

Explained and shown in Figs. 1-5 is the version wherein hand tool 5 has one female brush and one male brush. In the simplest form of the invention (not shown), there is only one grippable member and one cleaning member (e,g. grippable member 15 is mounted at end portion 10c on surface 10a, and brush 20 or brush 30 mounted at end portion 10d on surface 10b).

In the above illustrated explanation, female brush 20 and male brush 30 are offset from each other in a direction transverse to member 10. One advantage of this configuration is that the thumb or other part of one hand can be placed on surface 10a proximate female brush 20 and opposite of brush 30 to provide stability as pipe end I is loaded onto brush 30. In another embodiment of tool 5 (shown in plan view in Fig. 6), female brush 20 and male brush 30 are aligned in a direction transverse to member 10.

It will be appreciated that different combinations of brushes 20 and/or 30 are possible. For example, instead of the illustrated female brush 20 and opposed male brush 30, end portion 10d may have two opposed female brushes 20 (not shown) or two opposed male brushes 30 (not shown). This permits two differently sized male brushes or two differently sized female brushes to be usefully available in certain applications.

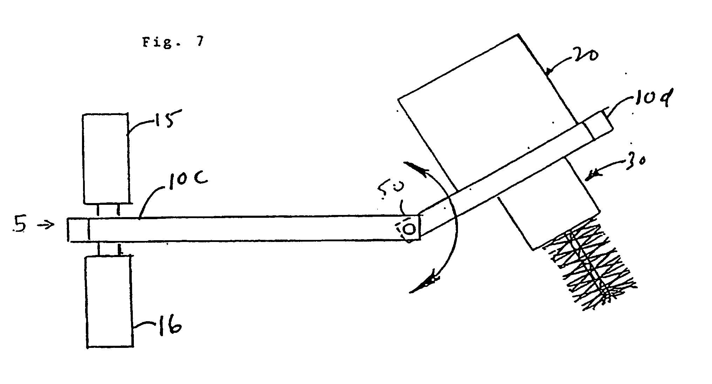

Another example of tool 5 is shown in Fig. 7, wherein end portion 10c is angularly movable with respect to end portion 10d by operation of intermediate hinge 50. This allows for a wider application of tool 5. For example, tool 5 of Fig. 7 permits the cleaning of pipe end 1 which is fixed in a crowded environment; e.g. an environment that does not permit complete rotation of end portion 10c about end portion 10d (whose male brush 30 is placed in pipe end 1) as contemplated by the versions shown in Figs. 1-6.

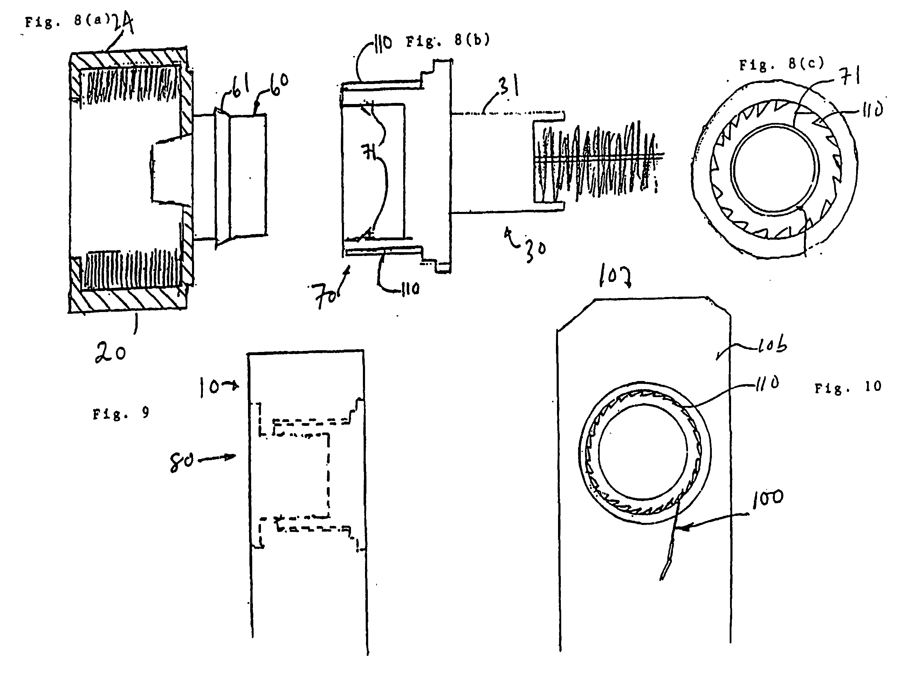

Another example of tool 5 is shown in Figs. 8-11, wherein brushes 20 and 30 are detachable from member 10. In Figs. 8-11, reference numerals which are identical to those of Figs. 1-6 represent similar or identical elements, except where the context otherwise indicates. The main difference between brushes 20 and 30 of Figs. 1-6 and brushes 20 and 30 of Figs. 8-11 is their attachment to member 10. In Figs. 8-11, brushes 20 and 30 are detachably connectable to each other and to member 10 with a snap lock mechanism. Female brush 20 has stem 60 with annular lip 61. Male brush 30 has annular stem 70, which has annular lip 71 having a profile that is complementary to lip 61 to create a conventional snap lock and unlock mechanism. As shown in Fig. 9, member 10 has a through hole 80 profiled to receive snugly stems 60 and 70 when attached as described above. When attached, the result (in side view) appears as shown in Fig. 6. Differently sized brushes of this detachable embodiment, may be employed to fit differently sized pipe ends 1. Optionally (as seen in Fig. 8(b) and 8(c) and in conjunction with Fig. 10, explained below), male brush 30 may have gear 110.

Another example of tool 5 is shown in Fig. 10 to facilitate rotational movement of tool 5 about pipe end 1 which is fixed in a crowded environment (e.g. as contemplated by the embodiment shown in Fig. 7). As seen in Fig. 8(c), gear 110 is disposed on the outer surface of stem 70 and when brushes 20 and 30 are attached, as explained above, the teeth of gear 110 of male brush 30 are exposed above surface 10b. Steel clip 100 is disposed on surface 10b to engage gear 110 in a conventional ratchet-type mechanism. A variation is where female brush 20 has gear 110 (not shown).

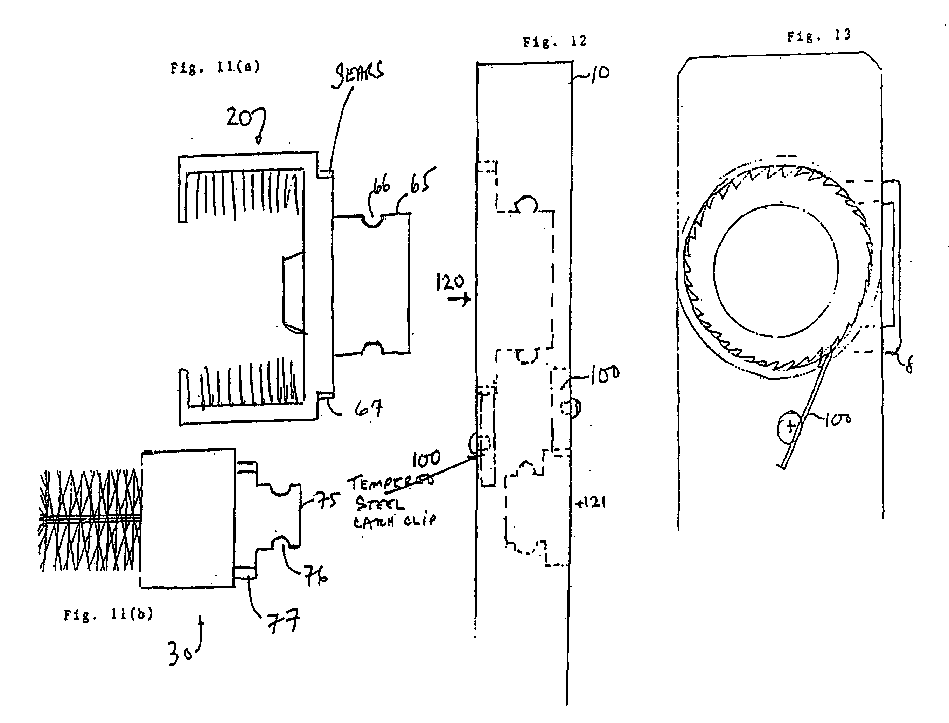

In another example of tool 5, female brush 20 has stem 65 with annular channel 66, and gear 67 (as shown in Fig. 11(a)) and male brush 30 has stem 75 with annular channel 76, and gear 77. As shown in Fig. 12, member 10 has blind hole 120 profiled to snugly receive stem 65 in a friction fit. Proximate to hole 120, there is embedded within surface 10a, an associated clip 100 to create a ratchet type mechanism (as explained for Fig. 11). Also shown in Fig. 12, member 10 has blind hole 121 profiled to snugly receive in a friction fit stem 75. Proximate to blind hole 121, there is embedded within surface 10b, an associated clip 100 to create a ratchet type mechanism. To lock stems 65 or 75 in place, member 10 has on its side, two blind holes profiled to receive U-shaped key 80 in a friction fit, to engage annular channel 66 or 76, as the case may be, and to prevent the escape of stems 65 or 75 from their respective blind holes 120 or 121, as shown in FIg. 13.

Tool 5 is made of rigid material (typically metal or plastic). Brushes 20 and 30 are conventionally made and attached to tool 5 as described above. Hinge 50 is conventional.

For a 1/2" pipe end, the following may be acceptable dimensions for tool 5. Female brush is about 2.5 cm (1")high, and the diametrical separation from opposed brush wires (i.e. internal diameter defined) is about 1.25 cm (1/2"), and the internal diameter of lip 24 is slighter larger than that. Female brush is about 2.5 cm (1") high. Male brush 30 is about 1.875 cm (3/4") high and has diameter of about 1.56 cm. Lip 33 is about 0.3 cm (1/8") thick.

It will be appreciated that the dimensions given are merely for purposes of illustration and are not limiting in any way. The specific dimensions given may be varied in practising this invention, depending on the specific application.

While the principles of the invention have now been made clear in the illustrated examples, there will be immediately obvious to those skilled in the art, many modifications of structure, arrangements, proportions, the elements, materials and components used in the practice of the invention, and otherwise, which are particularly adapted for specific environments and operational requirements without departing from those principles. The claims are therefore intended to cover and embrace such modifications within the limits only of the scope of the invention.

## Claims

1. Hand tool (5) for cleaning the end of a pipe comprising:
(a) a longitudinal member (10) having first and second opposed end portions (10c, 10d) and first and second opposed longitudinal sides (10a, 10b);
(b) a first grippable member (15) and a second grippable member (16), both rotatably connected to said first end portion (10c) on said first and said second longitudinal sides (10a, 10b) respectively;
(c) a first cleaning member (20) connected to said second end portion (10d) on said first longitudinal side (10a) for receiving a pipe end in a direction transverse to said longitudinal member (10); and
(d) a second cleaning member (30) connected to said second end portion (10d) on said second longitudinal side (10b) for receiving a pipe end in a direction transverse to said longitudinal member (10).

2. Hand tool (5) according to claim 1, **characterised in that** one of said first or said second cleaning members (20, 30) comprises a cylindrical female brush (20) for receiving the pipe end.

3. Hand tool (5) according to claim 1, **characterised in that** one of said first or said second cleaning members (20, 30) comprises a cylindrical male brush (30) for fitting into the pipe end.

4. Hand tool (5) according to claim 2, **characterised in that** it further comprises a guide member (23) disposed centrally within said female brush (20) for guiding the pipe end into and maintaining the pipe end in place relative to said female brush (20).

5. Hand tool (5) according to claim 4, **characterised in that** said guide member (23) comprises a cylindrical projection with a downwardly beveled wall.

6. Hand tool (5) according to claim 4, **characterised in that** the surface of said guide member (23) comprises a deburring surface.

7. Hand tool (5) according to claim 2, 4, 5 or 6, **characterised in that** said female brush (20) has a plurality of wires (22) disposed in an annular configuration, and said wires are directed radially inwardly.

8. Hand tool (5) according to claim 3, **characterised in that** it further comprises a pedestal (31) onto which said cylindrical male brush (30) is disposed.

9. Hand tool (5) according to claim 8, **characterised in that** said pedestal (31) has a circular lip (33) for guiding the outer surface of the pipe end over said male brush (30).

10. Hand tool (5) according to claim 1, 2 or 3, **characterised in that** said first cleaning member (20) and said second cleaning member (30) are coaxially aligned in a direction transverse to said longitudinal member (10).

11. Hand tool (5) according to claim 1, 2 or 3, **characterised in that** said first cleaning member (20) is axially offset from said second cleaning member (30) in a direction transverse to said longitudinal member (10).

12. Hand tool (5) according to claim 1, 2 or 3, **characterised in that** one of said first or second cleaning members (20, 30) is detachably attached to said second longitudinal member (10).

13. Hand tool (5) according to claim 1, 2 or 3, **characterised in that** one of said first or second cleaning members (20, 30) is rotatable in radial increments relative to said first or second longitudinal side respectively by a ratchet mechanism (100, 110).

14. Hand tool (5) according to claim 1, **characterised in that** it further comprises pivot means (50), disposed between said first and second end portions (10c, 10d), for allowing said first and second end portions to be pivoted and disposed at an oblique angle to each other.

## Patentansprüche

1. Handwerkzeug (5) für die Reinigung von Rohrenden mit:
(a) einem Längselement (10) mit einer ersten und zweiten gegenüber liegenden Endportion (10c, 10d) und einer ersten und zweiten gegenüber liegenden Längsseite (10a, 10b);
(b) einem ersten (15) und einem zweiten (16) mit der Hand anzufassendem Element, die beide rotierend mit der besagten erste Endportion (10c) auf der besagten ersten und zweiten Längsseite (10a, 10b) angeschlossen sind;
(c) einem ersten Reinigungselement (20), das mit der besagten zweiten Endportion (10d) auf der besagten ersten Längsseite (10a) angeschlossen ist, um das Rohrendstück quer zum besagten Längselement (10) aufzunehmen; und
(d) einem zweiten Reinigungselement (30), das mit der besagten zweiten Endportion (10d) auf der besagten zweiten Längsseite (10b) angeschlossen ist, um das Rohrendstück quer zum besagten Längselement (10) aufzunehmen.

2. Handwerkzeug (5) laut Beanspruchung 1, charakterisiert durch die Tatsache dass eines der besagten ersten oder zweiten Reinigungselemente (20, 30) eine zylindrische Bürstendose (20) für die Aufnahme des Rohrendes umfasst.

3. Handwerkzeug (5) laut Beanspruchung 1, charakterisiert durch die Tatsache dass eines der besagten ersten oder zweiten Reinigungselemente (20, 30) einen zylindrischen Bürstenzapfen (30) für das Aufsetzen des Rohrendes umfasst.

4. Handwerkzeug (5) laut Beanspruchung 2, charakterisiert durch die Tatsache, dass weiterhin eine Führungsschiene (23) vorhanden ist, die innen in der Mitte der besagten Bürstendose (20) verläuft, um das Rohrende zu leiten und in der richtigen Position zur besagten Bürstendose (20) zu halten.

5. Handwerkzeug (5) laut Beanspruchung 4, charakterisiert durch die Tatsache, dass die besagte Führungsschiene (23) einen zylindrischen Vorsprung mit nach unten abgerundeter Wand umfasst.

6. Handwerkzeug (5) laut Beanspruchung 4, charakterisiert durch die Tatsache, dass die Oberfläche der besagten Führungsschiene (23) eine entgratete Oberfläche hat.

7. Handwerkzeug (5) laut Beanspruchung 2, 4, 5 oder 6, charakterisiert durch die Tatsache, dass in der besagten Bürstendose (20) mehrere Drähte (22) ringförmig angeordnet und in radialer Richtung gegen das Innere gerichtet sind.

8. Handwerkzeug (5) laut Beanspruchung 3, charakterisiert durch die Tatsache, dass weiterhin ein Sockel (31) vorhanden ist, auf welcher der besagte, zylindrische Bürstenzapfen (30) aufliegt.

9. Handwerkzeug (5) laut Beanspruchung 8, charakterisiert durch die Tatsache, dass der besagte Sockel (31) einen ringförmigen Rand (33) hat, um die Außenfläche des Rohrendes auf dem besagten Bürstenzapfen (30) zu leiten.

10. Handwerkzeug (5) laut Beanspruchung 1, 2 oder 3, charakterisiert durch die Tatsache, dass das besagte erste (20) und zweite (30) Reinigungselement koaxial in Querrichtung zum besagten Längselement (10) ausgerichtet ist.

11. Handwerkzeug (5) laut Beanspruchung 1, 2 oder 3, charakterisiert durch die Tatsache, dass das besagte erste Reinigungselement (20) axial zum besagten zweiten Reinigungselement (30) in Querrichtung zum besagten Längselement (10) versetzt ist.

12. Handwerkzeug (5) laut Beanspruchung 1, 2 oder 3, charakterisiert durch die Tatsache, dass eines der beiden Reinigungselemente (20, 30) mit dem besagten zweiten Längselemente abtrennbar verbunden ist.

13. Handwerkzeug (5) laut Beanspruchung 1, 2 oder 3, charakterisiert durch die Tatsache, dass eines der beiden Reinigungselemente (20, 30) gegenüber der besagten ersten oder zweiten Längsseite mit radialer Zunahme rotiert und zwar durch einen Zahnanschlag-Mechanismus (100, 110).

14. Handwerkzeug (5) laut Beanspruchung 1, charakterisiert durch die Tatsache, dass es weiterhin Rotationsmittel (50) enthält, die zwischen der ersten und zweiten Endportion (10c, 10d) angeordnet sind, um die Rotation und Anordnung in einem schrägen Winkel zueinander der besagten ersten und zweiten Endportion zu ermöglichen.

## Revendications

1. Outil manuel (5) pour nettoyer l'extrémité d'un tube comprenant:
(a) un élément longitudinal (10) avec une première et une seconde portion terminale (10c, 10d) opposées et un premier et un second côté longitudinal (10a, 10b) opposés;
(b) un premier élément empoignable (15) et un second élément empoignable (16), les deux étant reliés en mode pivotant à ladite première portion terminale (10c) sur ledit premier et second côté longitudinal (10a, 10b) respectivement;
(c) un premier élément de nettoyage (20) relié à ladite seconde portion terminale (10d) sur ledit premier côté longitudinal (10a) pour recevoir une extrémité de tube dans un sens transversal audit élément longitudinal (10); et
(d) un second élément de nettoyage (30) relié à ladite seconde portion terminale (10d) sur ledit second côté longitudinal (10b) pour recevoir une extrémité de tube dans un sens transversal audit élément longitudinal (10).

2. Outil manuel (5) selon la revendication 1, **caractérisé en ce que** ledit premier ou ledit second élément de nettoyage (20, 30) comprend une brosse femelle cylindrique (20) pour recevoir l'extrémité de tube.

3. Outil manuel (5) selon la revendication 1, **caractérisé en ce que** un desdits premier ou second élément de nettoyage (20, 30) comprend une brosse mâle cylindrique (30) pour recevoir l'extrémité de tube.

4. Outil manuel (5) selon la revendication 2, **caractérisé en ce qu'**il comprend en outre un élément de guidage (23) disposé au centre à l'intérieur de ladite brosse femelle (20) pour guider l'extrémité de tube et maintenir l'extrémité de tube en position par rapport à ladite brosse femelle (20).

5. Outil manuel (5) selon la revendication 4, **caractérisé en ce que** ledit élément de guidage (23) comprend un rebord cylindrique avec une paroi biseautée vers le bas.

6. Outil manuel (5) selon la revendication 4, **caractérisé en ce que** la surface dudit élément de guidage (23) comprend une surface d'ébavurage.

7. Outil manuel (5) selon la revendication 2, 4, 5 ou 6, **caractérisé en ce que** ladite brosse femelle (20) possède une pluralité de fils (22) disposés en une configuration annulaire, lesdits fils étant dirigés dans un sens radial vers l'intérieur.

8. Outil manuel (5) selon la revendication 3, **caractérisé en ce qu'**il comprend encore un piédestal (31) sur lequel est placée ladite brosse mâle cylindrique (30).

9. Outil manuel (5) selon la revendication 8, **caractérisé en ce que** ledit piédestal (31) a un ourlet circulaire (33) pour guider la surface extérieure de l'extrémité de tube sur ladite brosse mâle (30).

10. Outil manuel (5) selon la revendication 1, 2 ou 3, **caractérisé en ce que** ledit premier élément de nettoyage (20) et ledit second élément de nettoyage (30) sont alignés en mode coaxial dans un sens transversal audit élément longitudinal (10).

11. Outil manuel (5) selon la revendication 1, 2 ou 3, **caractérisé en ce que** ledit premier élément de nettoyage (20) est décalé dans le sens axial audit second élément de nettoyage (30) dans un sens transversal audit élément longitudinal (10).

12. Outil manuel (5) selon la revendication 1, 2 ou 3, **caractérisé en ce que** lesdits premier ou second élément de nettoyage (20, 30) est attaché de manière détachable audit second élément longitudinal.

13. Outil manuel (5) selon la revendication 1, 2 ou 3, **caractérisé en ce que** un desdits premier ou second élément de nettoyage (20, 30) est pivotant en incréments radiaux par rapport audit premier et second côté longitudinal respectivement au moyen d'un mécanisme à dent d'arrêt (100, 110).

14. Outil manuel (5) selon la revendication 1, **caractérisé en ce qu'**il comprend aussi des moyens de rotation (50), placés entre les dites première et seconde portions terminales (10c, 10d), pour permettre aux dites première et seconde portions terminales d'être pivotées et de se disposer à un angle oblique une par rapport à l'autre.
